(19) Europäisches Patentamt
European Patent Office
Office européen des brevets

(11) **EP 3 853 110 B1**

(12) **EUROPÄISCHE PATENTSCHRIFT**

(45) Veröffentlichungstag und Bekanntmachung des Hinweises auf die Patenterteilung:
**05.07.2023  Patentblatt 2023/27**

(21) Anmeldenummer: **19774087.1**

(22) Anmeldetag: **20.09.2019**

(51) Internationale Patentklassifikation (IPC):
**B62D 31/00** (2006.01)    **B62D 61/06** (2006.01)
**B62K 5/05** (2013.01)     **B62K 5/08** (2006.01)
**B62K 5/10** (2013.01)     **B62M 6/85** (2010.01)
**B62M 6/90** (2010.01)

(52) Gemeinsame Patentklassifikation (CPC):
**B62D 31/003; B62D 23/005; B62D 61/065; B62K 5/05; B62K 5/06; B62K 5/08; B62K 5/10; B62M 6/85; B62M 6/90**

(86) Internationale Anmeldenummer:
**PCT/EP2019/075416**

(87) Internationale Veröffentlichungsnummer:
**WO 2020/058513 (26.03.2020 Gazette 2020/13)**

(54) **KOMPAKTES DREIRÄDRIGES ELEKTROFAHRZEUG**

COMPACT THREE-WHEELED MOTOR VEHICLE

VÉHICULE ÉLECTRIQUE COMPACT À TROIS ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2018  DE 102018123252**

(43) Veröffentlichungstag der Anmeldung:
**28.07.2021  Patentblatt 2021/30**

(73) Patentinhaber: **Share your BICAR AG
8608 Bubikon (CH)**

(72) Erfinder:
• **BURRI MICHEL, Adrian
8608 Bubikon (CH)**
• **DENNIG, Hans-Jörg
8608 Bubikon (CH)**
• **JACOMET, Cyrill
8400 Winterthur (CH)**
• **BERGER, Salome Johanna
8422 Pfungen (CH)**

(74) Vertreter: **Müller Hoffmann & Partner
Patentanwälte mbB
St.-Martin-Strasse 58
81541 München (DE)**

(56) Entgegenhaltungen:
**WO-A1-2011/032368**

• **Minds Eye Design: "10 Leaning Vehicles | Innovative Trikes and Electric Three Wheelers", Youtube, 25. November 2017 (2017-11-25), Seite 1 pp., XP054979944, Gefunden im Internet: URL:https://www.youtube.com/watch?v=SXn7y O EdpkE&feature=youtu.be [gefunden am 2019-11-22]**
• **"LA VILLE? <<SAM>> VAÜ", REVUE AUTOMOBILE, BUECHLER GRAFINO AG, BERNE, CH, Nr. 34, 23. August 2001 (2001-08-23), Seite 9, XP001096976, ISSN: 0035-0761**
• **Minds Eye Design: "10 Leaning Vehicles | Innovative Trikes and Electric Three Wheelers", Youtube, 25 November 2017 (2017-11-25), page 1 pp., XP054979944, Retrieved from the Internet: URL:https://www.youtube.com/watch?v=SXn7y O EdpkE&feature=youtu.be [retrieved on 2019-11-22]**
• **"LA VILLE? <<SAM>> VAÜ", REVUE AUTOMOBILE, BUECHLER GRAFINO AG, BERNE, CH, no. 34, 23 August 2001 (2001-08-23), page 9, XP001096976, ISSN: 0035-0761**

EP 3 853 110 B1

- Anonymous: "BMW C1-E - Elektroroller von BMW | autozeitung.de", , 13 October 2009 (2009-10-13), XP055913630, Retrieved from the Internet: URL:https://www.autozeitung.de/bmw-c1-e-elektroroller-von-bmw-16229.html [retrieved on 2022-04-20]
- Cnet: "Toyota i-Road is a real head-turner", , 4 February 2015 (2015-02-04), XP055913656, Retrieved from the Internet: URL:https://www.youtube.com/watch?v=i4bj1eUOXgk

**Beschreibung**

Die Erfindung betrifft ein dreirädriges Elektrofahrzeug gemäß dem Oberbegriff von Anspruch 1 mit einer Vorderachseinrichtung mit zwei lenkbaren, im Geradeauslauf im Wesentlichen parallel zueinander ausgerichteten Vorderrädern; einer Hinterachseinrichtung mit einem angetriebenen Hinterrad; und einem Fahrzeugrahmen, an dem die Vorderachseinrichtung und die Hinterachseinrichtung abgestützt sind, wobei die Vorderachseinrichtung derart ausgebildet ist, dass der Fahrzeugrahmen und die Vorderräder bei einem Lenkeinschlag in die Richtung des Lenkeinschlags neigbar sind.

Beispiele für ähnliche Fahrzeuge sind etwa "i-Road" von Toyota (https://www.youtube.com/watch?v=i4bj1ellOXgk) mit lenkbarem Hinterrad oder "Sway" von Sway Motorsports. Das Sway Fahrzeug zeigt den Oberbegriff des Anspruchs 1. Ferner gibt es zu dreirädrigen Fahrzeugen mit Neigetechnik auch Beispiele mit Verbrennungsmotor, wie etwa MP3 300 von Piaggio. Ferner wird auf das dreirädrige Elektrofahrzeug "Sam" hingewiesen (REVUE AUTOMOBILE, BUECHLER GRAFINO AGF, BERNE CH, Nr. 34, 23. August 2001, Seite 9, ISSN:0035-0761) sowie auf den Elektroroller C1 von BMW (https://www.autozeitung.de/bmw-c1-e-elektroroller-von-bmw-16229.html)

In der WO 2017/064631 A1 wird ein dreirädriges Fahrzeug gezeigt, das eine spezifische Ausgestaltung der parallelkinematischen Vorderradaufhängung aufweist, wobei keine Details zum weiteren Aufbau des Fahrzeugs beschrieben sind.

In heutigen Städten hat sich gezeigt, dass bei steigender Wohnbevölkerung der zur Verfügung stehende Raum für Verkehrsflächen nicht ausreicht, um den Individualverkehr abzuwickeln. Dabei umfasst Individualverkehr nicht nur das Unterwegssein mit einem Fahrzeug, sondern auch das Parken eines Fahrzeugs. In beiden Fällen wird dabei Raum beansprucht. Dabei ist zu berücksichtigen, dass in einem Fahrzeug oft nur eine Person sitzt, so dass der vom Fahrzeug beanspruchte Raum in Relation zu der einzigen damit beförderten Person zu groß ist. Andererseits besteht in Städten regelmäßig das Bedürfnis als Einzelperson schnell von einem zum anderen Ort zu kommen.

Die der Erfindung zu Grunde liegende Aufgabe wird darin gesehen, ein dreirädriges Elektrofahrzeug anzugeben, bei dem die obigen Nachteile vermieden werden können.

Diese Aufgabe wird gelöst durch ein dreirädriges Elektrofahrzeug mit den Merkmalen des unabhängigen Anspruchs 1.

Das dreirädriges Elektrofahrzeug ist ausgeführt mit

einer Vorderachseinrichtung mit zwei lenkbaren, im Geradeauslauf im Wesentlichen parallel zueinander ausgerichteten Vorderrädern;
einer Hinterachseinrichtung mit einem angetriebenen Hinterrad;
einem Fahrzeugrahmen, an dem die Vorderachseinrichtung und die Hinterachseinrichtung abgestützt sind;
wobei die Vorderachseinrichtung derart ausgebildet ist, dass der Fahrzeugrahmen und die Vorderräder bei einem Lenkeinschlag in die Richtung des Lenkeinschlags neigbar sind,

wobei ein Kompaktheitswert KW, der sich berechnet aus dem Verhältnis zwischen dem Abstand SP der im Geradeauslauf im Wesentlichen parallel angeordneten Vorderräder zueinander und dem in Geradeauslaufstellung der Vorderräder gemessenen Radstand RS zwischen den Vorderrädern und dem Hinterrad folgende Bedingung erfüllt:

$$\text{bei } KW = SP \ / \ RS$$

$$0{,}50 \leq KW \leq 0{,}80,$$

insbesondere $0{,}62 \leq KW \leq 0{,}78$.

Dabei ist der Abstand SP der im Geradeauslauf im Wesentlichen parallel angeordneten Vorderräder zueinander als sogenannte Spur zu verstehen und wird bezogen auf die Breite der Räder mittig gemessen.

Durch eine derartige Ausgestaltung des Fahrzeugs wird sichergestellt, dass das Fahrzeug nur wenig Verkehrsfläche bzw. Raum beansprucht bei gleichzeitig sicherer Fahrstabilität aufgrund der eingesetzten Neigetechnik bei Kurvenfahrten.

Der Radstand RS kann 1300mm oder weniger betragen, insbesondere 900mm bis 1100mm, und der Abstand SP zwischen den im Geradeauslauf im Wesentlichen parallel angeordneten Vorderrädern kann 1000mm oder weniger und 500mm oder mehr betragen, insbesondere 600mm bis 800mm.

Wendet man derartige Maße auf das Fahrzeug an unter Berücksichtigung des oben genannten Kompaktheitswertes KW, nimmt ein solches Fahrzeug üblicherweise eine Fläche in Anspruch, die kleiner ist als 1,5m². Insbesondere können der Radstand RS und der Abstand (Spur SP) so gewählt sein, dass ein die drei Räder umschreibendes Rechteck, das als eine Art projizierte Grundfläche des Fahrzeugs verstanden werden kann, das sich beispielsweise aus der Fahrzeuglänge und der Fahrzeugbreite als Rechteckseiten bestimmen lässt, eine Fläche von etwa 0,8 bis 1,2 m² aufweist. Somit können auf der gleichen Fläche, die aktuell für einen einzigen Klein- oder Mittelklassewagen in Anspruch genommen wird, mindestens zwei oder mehr der hier beschriebenen dreirädrigen Elektrofahrzeuge untergebracht werden.

Die hier vorgestellten Kennzahlen bzw. Maße für ein dreirädriges Elektrofahrzeug beruhen auf der Erkenntnis, dass ein platzsparendes Elektrofahrzeug nicht durch bloßes Verkleinern von Fahrzeugen bekannter Bauart möglich ist, sondern, dass das Fahrzeug bei möglichst wenig beanspruchtem Raum eine ausreichende Standfestigkeit und gute bzw. gutmütige Fahreigenschaften aufweist.

Das Hinterrad kann im Geradeauslauf mittig zwischen den Vorderrädern angeordnet sein, derart, dass zwischen einer mittig verlaufenden Längsachse des Fahrzeugs und einer gedachten Verbindungslinie zwischen dem Hinterrad und einem der Vorderräder ein Winkel gebildet ist, der 15° und mehr beträgt, insbesondere 17,5° und mehr beträgt. Die gedachte Verbindungslinie kann beispielsweise von den jeweiligen Mittelpunkten des Hinterrads und des betreffenden Vorderrads gemessen werden. Durch die Festlegung eines Mindestwinkels wird sichergestellt, dass das Fahrzeug einen sicheren Stand auf seinen drei Rädern hat. Üblicherweise wird der Winkel nicht größer sein als 30°.

An dem Fahrzeugrahmen kann eine Sitzeinrichtung für einen Fahrer des Fahrzeugs angeordnet sein, wobei eine Sitzfläche eines Sitzes der Sitzeinrichtung im unbelasteten Zustand des Fahrzeugs auf einer Höhe über dem das Fahrzeug abstützenden Untergrund liegt, die 700mm oder mehr beträgt. Hierdurch wird sichergestellt, dass in dem Fahrzeug Personen unterschiedlicher Größe Platz nehmen und das Fahrzeug bedienen können. Insbesondere ist das Fahrzeug mit seiner Sitzeinrichtung so ausgestaltet, dass sowohl eine 5-Perzentil Frau, als auch ein 95-Perzentil Mann bequem darin Platz finden.

Der Sitz der Sitzeinrichtung kann in Längsrichtung des Fahrzeugs relativ zum Fahrzeugrahmen verstellbar sein, insbesondere um 150 bis 200mm entlang einer zum Untergrund im Wesentlichen parallelen oder geneigten Verstellebene. Dies ermöglicht das Einstellen einer optimalen Position des Fahrers in dem Fahrzeug, so dass einerseits die Bedienung bequem ist und andererseits für Personen unterschiedlicher Größe eine gute Übersicht beim Fahren ermöglicht wird. Die Sitzverstellung in Längsrichtung kann dabei parallel zum Boden bzw. Untergrund oder in einem Winkel schräg nach hinten oben von mehr als 0° bis 20° erfolgen.

Die Sitzeinrichtung kann eine Rückenlehne aufweisen, die mit dem Sitz in Längsrichtung des Fahrzeugs verstellbar ist oder/und die relativ zum Sitz verstellbar ist. Denkbar ist, dass die Rückenlehne sowohl in ihrer Position in Längsrichtung zum Fahrzeugsitz verstellbar ist, aber optional auch in ihrer Neigung verstellt werden kann.

Der Fahrzeugrahmen ist in sich geschlossen und derart ausgebildet, dass er einen im Fahrzeug aufgenommenen Fahrer umgibt, insbesondere den Oberkörper und den Kopf eines Fahrers umgibt. Eine derartige Ausgestaltung erhöht die Sicherheit für einen Fahrer des Fahrzeugs, insbesondere im Falle einer Kollision. Ferner bietet eine derartige Rahmenstruktur auch verbesserte Möglichkeiten im Hinblick auf den Schutz eines Insassen vor Witterungseinflüssen.

An dem Fahrzeugrahmen ist eine Sicherheitsvorrichtung, insbesondere eine Sicherheitsgurtvorrichtung, angeordnet, wobei wenigstens ein Haltepunkt der Sicherheitsvorrichtung derart an dem Fahrzeugrahmen angeordnet ist, dass auf die Sicherheitsvorrichtung wirkende Kräfte in einen oberen oder/und vorderen Abschnitt des Fahrzeugrahmens eingeleitet werden. Damit kann erreicht werden, dass insbesondere bei einer Kollision wirkende Kräfte optimiert auf den gesamten Fahrzeugrahmen verteilt werden. Im Gegensatz hierzu ist es bei bekannten dreirädrigen Fahrzeugen oftmals so, dass Haltepunkt nur in einem unteren Bereich des Fahrzeugs vorgesehen sind oder am Sitz selbst angebracht sind.

An dem Fahrzeugrahmen kann eine Verschalung angeordnet sein, die aus wenigstens einem Verschalungselement gebildet ist. Dabei kann die Verschalung derart ausgebildet sein, dass der Zugang zum Fahrzeug bezogen auf dessen Längsrichtung von schräg hinten oder von der Seite ermöglicht ist. Ferner kann die Verschalung wenigstens ein als Frontscheibe ausgebildetes transparentes Verschalungselement aufweisen. Neben Verschalungselemente ist auch möglich, den Rahmen mit einem Textil zu bespannen oder zwischen den Rahmenelemente zu befestigen und so einen Witterungsschutz für den Fahrer sicherzustellen.

Die Verschalung dient als Witterungsschutz für den Insassen des Fahrzeugs. Ferner bildet die Verschalung eine aerodynamisch optimiert geformte Hülle, so dass der Luftwiderstand des Fahrzeugs möglichst gering gehalten werden kann.

Die Verschalung kann wenigstens ein Solarmodul aufweisen. Somit kann zumindest ein Teil des für den Antrieb des Fahrzeugs erforderlichen Stroms durch Sonnenenergie gewonnen werden.

Der Fahrzeugrahmen kann weiter derart ausgebildet sein, dass in einem Bereich oberhalb der Vorderräder ein Stauraum ausgebildet ist. Dieser Stauraum dient der Aufnahme von Gegenständen, wie etwa Tasche, Rucksack oder ähnliches, die von einem Insassen mitgeführt werden sollen. Das Staufach ist durch die Verschalung gegen Witterungseinflüsse geschützt. Der Stauraum ist für einen Insassen vom Fahrzeuginneren her zugänglich. Der Stauraum kann ein offenes aber auch komplett geschlossenes Fach sein. Auch ist ein Zugang von vorne möglich und das Fach kann abschließbar sein. Das Auf- und Abschließen des Fachs und eine Ansteuerung eines dazu gehörigen elektromechanischen Schlosses erfolgt durch die Betätigung eines Auslösebefehls an einem Stellglied am Fahrzeug oder einer Software, welcher der Nutzer auf seinem mobilen Device (Smartphone) auslöst und via Bluetooth oder andere drahtloser Kommunikationslösung die Bordelektronik des Fahrzeugs angesteuert wird. Auch kann das Schloss durch Betätigen eines Schalters im Fahrzeug aktiviert werden.

Der elektrische Antrieb ist als Radnabenmotor ausgebildet, der auf das Hinterrad wirkt. Hierdurch wird eine einfache und wartungsarme Kraftübertragung vom Elektromotor auf das anzutreibende Hinterrad ermöglicht.

Das Fahrzeug kann eine Batterieanordnung aufweisen mit wenigstens einer Batterie, wobei die Batterieanordnung derart ausgebildet ist, dass die wenigstens eine Batterie in einer lösbaren Verankerung aufgenommen ist, wobei bei in der Verankerung aufgenommener Batterie gleichzeitig ein elektrischer Kontakt von der Batterie zu Stromversorgungsleitungen des Fahrzeugs lösbar hergestellt ist. Hierdurch wird ein rasches Auswechseln einer bzw. der Batterie ermöglicht. Insbesondere wird daran gedacht, dass die Batterie mittels einhändiger Bedienung ausgetauscht werden kann. Die Batterieanordnung kann insbesondere in einem unteren Bereich des Fahrzeugs vorgesehen sein, beispielsweise unterhalb einer Fußablage für den Insassen. Alternativ kann eine Batterie auch unterhalb des Sitzes angeordnet sein.

Die Batterieanordnung kann ein Batteriefach in einer Bodenplatte aufweisen, das mit einem Deckel versehen ist, wobei an dem Deckel eine Verriegelung vorgesehen ist, die durch Aktivieren eines Schalters oder Auslösen der Aktivierung an einem Mobilfunkgerät entriegelbar ist. Dadurch wird der Zugang zur Batterie freigegeben, die dann einhändig herausgenommen werden kann. Das Batteriefach wird insbesondere durch Elemente des Fahrzeugrahmens gebildet und zu einem Fußraum des Fahrzeugs hin mit einer Bodenplatte versehen.

Um die Wartung und Reparatur zu vereinfachen, ist die Vorderachseinrichtung gemeinsam mit einer Neigekinematik der Vorderräder als gesamte Einheit lösbar mit dem Fahrzeugrahmen verbunden. Für den gleichen Zweck kann die Hinterachseinrichtung gemeinsam mit einer Radaufhängung und einer Federungseinrichtung als Einheit lösbar mit dem Fahrzeugrahmen verbunden sein. Dies ermöglicht einen modularen Aufbau des Fahrzeugs im Wesentlichen aus den Komponenten bzw. Modulen Vorderachseinrichtung, Hinterachseinrichtung, Fahrzeugrahmen und Verschalung.

Das Dreirädrige Fahrzeug kann wenigstens einen Neigungsaktuator umfassen, der dazu eingerichtet ist, die seitliche Neigung des Fahrzeugs bei Kurvenfahrten einzustellen. Hierdurch kann das Fahrverhalten des Fahrzeugs optimiert werden, wobei insbesondere extreme Fahrsituationen oder Neigungen entschärft oder vermieden werden können.

Dabei kann der wenigstens eine Neigungsaktuator dazu eingerichtet sein, die seitliche Neigung basierend auf wenigstens einer Fahrdatengröße einzustellen, insbesondere basierend auf einem erfassten Lenkeinschlag oder/und auf der Geschwindigkeit des Fahrzeugs oder/und auf der seitlichen Schräglage des Fahrzeugs zum Untergrund.

Der wenigstens eine Aktuator kann an dem zu neigenden Teil des Fahrzeugs befestigt sein, so dass er mittels einer Zahnradübersetzung, die an dem Parallelogramm der Neigekinematik befestigt ist, Einfluss auf die seitliche Neigung nehmen kann. Selbstverständlich ist auch eine umgekehrte Anordnung denkbar. Alternativ kann die seitliche Neigung auch aus einem oder mehreren Linearzylindern oder anderen Aktuatoren als Neigungsaktuator(en) gebildet sein, so dass der Winkel zwischen Radverbindungsstangen und zu neigendem Teil des Fahrzeugs verändert werden kann. Der bzw. die wirkenden Neigungsaktuator(en) kann/können direkt oder über eine Getriebeeinrichtung, wie beispielsweise ein Kinematikgestänge, ein Seilzug oder dergleichen auf die Neigungskinematik einwirken.

Durch den wenigstens einen Neigungsaktuator kann die Neigung beispielsweise blockiert werden oder in Abhängigkeit von verschiedenen Inputparametern geregelt werden. Eine Regelung der seitlichen Neigung ist somit beispielsweise abhängig der Fahrgeschwindigkeit oder des Lenkeinschlags unabhängig vom Einwirken des Fahrers möglich. Wir die seitliche Neigung abhängig von der Schräglage des Fahrzeugs zum Untergrund geregelt, kann insbesondere ein Kippen des Fahrzeugs verhindert werden. Der Neigungsaktuator kann auch derart ausgeführt sein, dass er aktivierbar oder deaktivierbar ist.

Das dreirädrige Fahrzeug kann wenigstens einen Lenkaktuator umfassen, der dazu eingerichtet ist, einen Lenkeinschlag der Vorderräder einzustellen.

Dabei kann der wenigstens eine Lenkaktuator dazu eingerichtet sein, Lenkbewegungen vollständig automatisch auszuführen oder manuelle Lenkbewegungen eines Benutzers zumindest teilweise zu unterstützen oder nur manuelle Lenkbewegungen des Benutzers zuzulassen. Die Lenkung mittels des Lenkungsaktuators kann beispielsweise zwischen 100% ausgeschaltet (deaktiviert) bis und mit 100% eingeschaltet (automatische Lenkung aktiviert) sein. Ferner sind auch Zwischenstufen der Aktivierung des Lenkaktuators denkbar, in denen der Lenkungsaktuator manuell ausgeführte Lenkbewegungen unterstützen oder/und korrigieren kann. Im Fall einer aktivierten automatischen Lenkung muss der Fahrer keine Lenkbewegung durchführen. Der Lenkaktuator kann dann beispielsweise durch eine Steuereinheit bzw. eine Software angesteuert werden. Dabei kann der Lenkeinschlag beispielsweise basierend auf verschiedenen Inputparametern bestimmt werden, etwa durch Inputparameter, die durch Sensoren am Fahrzeug erfasst werden und/oder am Fahrzeug mittels einer Mobilfunkkommunikationsschnittstelle übermittelt/empfangen werden. Denkbar ist dabei auch eine Art passives oder ferngesteuertes, autonomes Bewegen des Fahrzeugs ohne einen Benutzer, um ein Fahrzeug beispielsweise von einem Lagerstandort zu einem Übergabestandort oder umgekehrt zu bewegen.

Der Fahrzeugrahmen des dreirädrigen Fahrzeugs kann aus wenigstens zwei Rahmenmodulen gebildet sein, wobei die Rahmenmodule lösbar miteinander gekoppelt sind oder/und beweglich zueinander gekoppelt sind.

Das Fahrzeug kann ein vorderes Rahmenmodul umfassen, an dem eine Windschutzscheibe angeordnet ist.

Ferner kann das Fahrzeug ein hinteres Rahmenmodul umfassen, an dem eine Rückenlehne eines Fahrzugsitzes angeordnet ist.

Weiter kann das Fahrzeug ein oberes Rahmenmodul umfassen, an dem ein Fahrzeugdach angeordnet ist.

Das vordere Rahmenmodul und das obere Rahmenmodul können auch als ein gemeinsames Frontrahmenmodul ausgebildet sein, das Windschutzscheibe und Fahrzeugdach umfasst.

Schließlich kann das Fahrzeug ein unteres Rahmenmodul umfassen, an dem die Vorderachseinrichtung und die Hinterachseinrichtung angeordnet sind.

Die Rahmenmodule können werkzeuglos miteinander koppelbar bzw. voneinander demontierbar sein. Hierdurch ist das Zusammenbauen bzw. Zerlegen eines Fahrzeugs vereinfacht. Durch den modulartigen Aufbau ist es ferner auch möglich, beschädigte Rahmenmodule rasch auszutauschen, so dass ein Fahrzeug nach kurzer Stand- bzw. Reparaturzeit wieder in Betrieb genommen werden kann. Die hier beschriebenen Rahmenmodule können mit den weiter oben beschriebenen Komponenten bzw. Modulen Vorderachseinrichtung und Hinterachseinrichtung kombiniert werden, die als Einheit ausgebildet sein können.

Die genannten Rahmenmodule können miteinander auch gelenkig verbunden sein, so dass sie relativ zueinander bewegt, gedreht, geschwenkt werden können. Bei einer gelenkigen Verbindung zwischen zwei Rahmenmodulen kann ein Gelenk eingesetzt werden, das in einer Position fixiert werden kann und gelöst werden kann, so dass man das Rahmenmodul beispielsweise um dieses Gelenk klappen kann. Sind die Rahmenmodule sind komplett demontierbar ausgeführt, können sie beispielsweise durch eine Steckverbindung miteinander verbunden sein oder/und verschraubt oder/und mittels Stiften aneinander fixiert sein.

Nachfolgend wird die Erfindung unter Bezugnahme auf die anliegenden Figuren genauer beschrieben, dabei zeigt:

Fig. 1     eine vereinfachte und schematische seitliche Ansicht eines dreirädrigen Fahrzeugs;

Fig. 2     eine vereinfachte und schematische Frontansicht des dreirädrigen Fahrzeugs der Fig. 1;

Fig. 3     eine vereinfachte und schematische Frontansicht des dreirädrigen Fahrzeugs der Fig. 1 in einer geneigten Lage bei Kurvenfahrt;

Fig. 4     eine vereinfachte und schematische Perspektivansicht des dreirädrigen Fahrzeugs der Fig. 1 von schräg links vorne;

Fig. 5     eine rein schematische Darstellung von drei Rädern eines Elektrofahrzeugs und zugeordneten Maßen;

Fig. 6     in den Teilfiguren A) bis C) eine Seitenansicht, eine Frontansicht und eine Draufsicht von oben auf ein Elektrofahrzeug mit Verschalung;

Fig. 7     eine vereinfachte und schematische Frontansicht einer Ausführungsform des dreirädrigen Fahrzeugs mit einem Neigungsaktuator;

Fig. 8     eine vereinfachte und schematische Seitenansicht einer Ausführungsform des dreirädrigen Fahrzeugs mit einem angehobenen Rahmenmodul;

Fig. 9     eine vereinfachte und schematische Seitenansicht der Ausführungsform des dreirädrigen Fahrzeugs der Fig. 8, wobei aus den Teildarstellungen A) bis D) verschiedene Rahmenmodule und deren montierter bzw. demontierter Zustand ersichtlich sind.

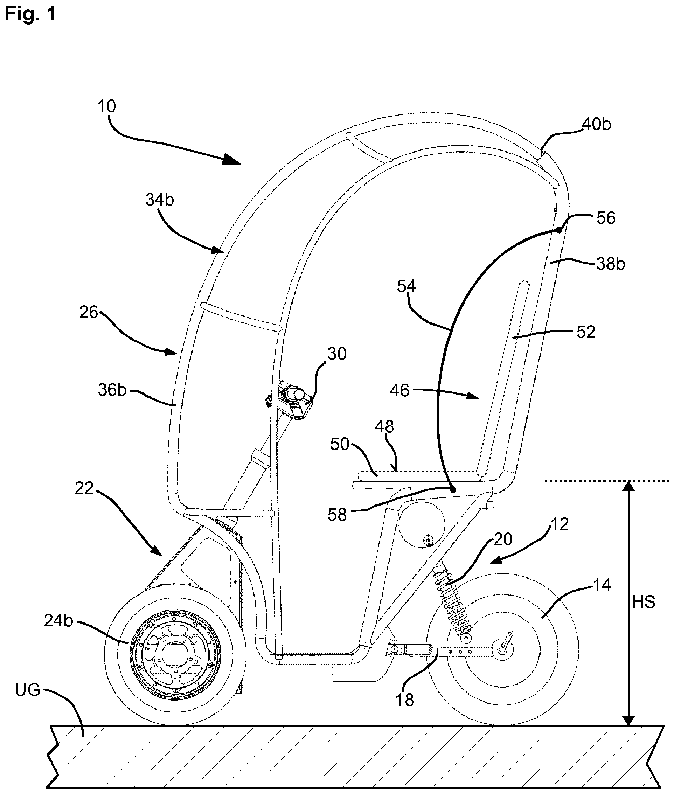

Fig. 1 zeigt in einer schematischen und vereinfachten seitlichen Darstellung ein dreirädriges Elektrofahrzeug 10. Das Fahrzeug 10 weist eine Hinterachseinrichtung 12 mit einem Hinterrad 14 auf. Die Hinterachseinrichtung 12 umfasst beispielsweise eine bewegliche Radaufhängung 18 und eine Federungseinrichtung 20 mit einem Stoßdämpfer. An einer Vorderachseinrichtung 22 sind zwei Vorderräder 24a, 24b angeordnet, von denen in der Fig. 1 nur das linke Vorderrad 24b sichtbar ist. Die Hinterachseinrichtung 12 und die Vorderachseinrichtung 22 sind an einem Fahrzeugrahmen 26 abgestützt.

Der Fahrzeugrahmen 26 ist in sich geschlossen und derart ausgebildet, dass er einen im Fahrzeug 10 aufgenommenen Insassen bzw. Fahrer umgibt, insbesondere den Oberkörper und den Kopf eines Fahrers umgibt.

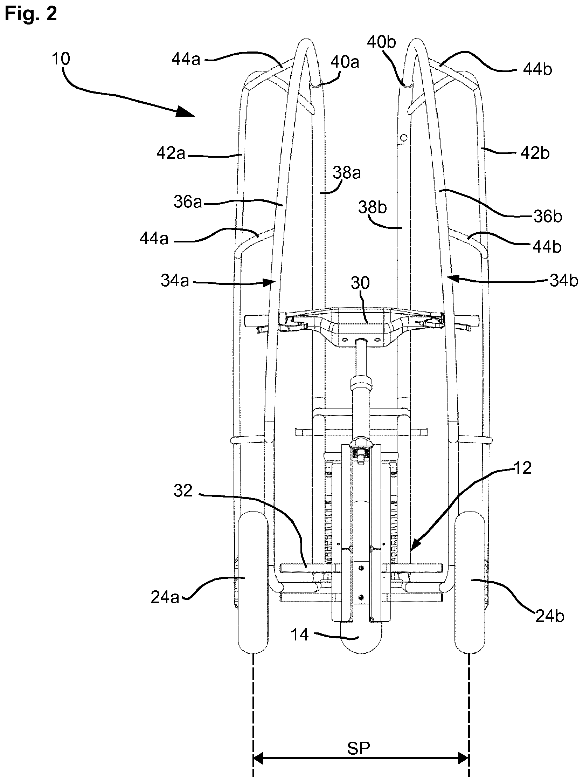

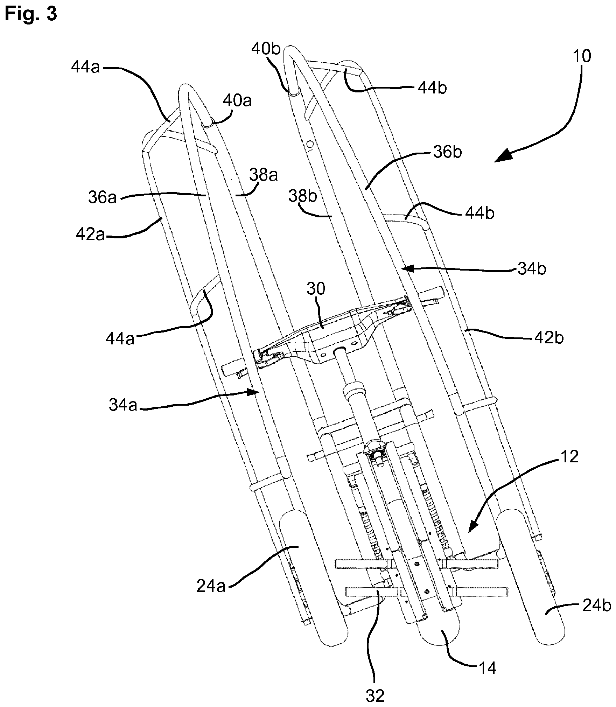

Aus den Fig. 2 und 3 ist ersichtlich, dass die beiden Vorderräder 24a, 24b lenkbar ausgeführt sind. Insbesondere sind die beiden Vorderräder 24a, 24b mit einer Lenkeinrichtung 30 gekoppelt, beispielsweise eine Lenkstange, so dass der Fahrer eine Fahrtrichtung durch bewegen der Lenkeinrichtung 30 bestimmen kann. Die Vorderachseinrichtung weist eine parallelkinematische Radaufhängung 32 auf, so dass die Vorderräder 24a, 24b und der Fahrzeugrahmen 26 bei Kurvenfahrten in Richtung der Kurveninnenseite geneigt werden können. Dies ist beispielhaft in der Fig. 3 gezeigt, in der das Fahrzeug 10 in eine nach rechts geneigten Stellung gezeigt.

Aus der Fig. 2 ist ferner auch ein möglicher Aufbau des Fahrzeugrahmens 26 besser ersichtlich. Der Fahrzeugrahmen 26 umfasst hier zwei Hauptrahmen 34a, 34b, die jeweils als geschlossene bzw. umlaufende Tragelemente ausgebildet sind. Die beiden Hauptrahmen 34a, 34b können aus mehreren Hauptrahmenabschnitten gebildet sein, die miteinander verbunden sind. Die Verbindung von Rahmenelementen bzw. Rahmenabschnitten kann dabei lösbar oder unlösbar, oder/und materialschlüssig (verschweißt, verklebt) oder/und formschlüssig (geklemmt, geschraubt) ausgeführt sein. Beispielsweise ist aus der Darstellung der Fig. 2 ersichtlich, dass die Hauptrahmen 34a, 34b einen vorderen Hauptrahmenabschnitt 36a, 36b und einen hinteren Hauptrahmenabschnitt 38a, 38b aufweisen, die an Verbindungsstellen 40a, 40b miteinander gekoppelt sind. Die Hinterachseinrichtung 12 und die Vorderachseinrichtung 22 sind mit den beiden Hauptrahmen 34a, 34b verbunden. Mit anderen Worten bilden die Hauptrahmen 34a, 34b eine Art Chassis des Fahrzeugs, das mit dem Fahrwerk (Achseinrichtungen 12, 22 mit Rädern 14, 24a, 24b) verbunden ist.

An den beiden Hauptrahmen 34a, 34b sind seitlich Hilfsrahmen 42a, 42b angebracht. Die Hilfsrahmen 42a, 42b sind insbesondere mittels mehrerer Streben 44a, 44b mit dem jeweiligen Hauptrahmen 34a, 34b verbunden. Die Hilfsrahmen 42a, 42b dienen insbesondere dazu, eine später noch zu beschreibende Verschalung für das Fahrzeug 10 abzustützen.

Es wird darauf hingewiesen, dass die hier dargestellte Ausführungsform des Fahrzeugrahmens 26 mit Hauptrahmen 34a, 34b und Hilfsrahmen 42a, 42 rein beispielhaft ist. Es ist auch denkbar, das seitlich äußere Rahmenelemente, wie etwa die hier als Hilfsrahmen 42a, 42b gezeigten, als Hauptrahmen dienen. Ferner wird darauf hingewiesen, dass der Fahrzeugrahmen auch weitere Rahmenelemente und Verbindungen aufweisen kann und auch geometrisch andere Formen als die hier dargestellten aufweisen kann. Wesentlich ist, dass der Fahrzeugrahmen eine den Insassen bzw. Fahrer umgebende, geschlossene Konstruktion ist.

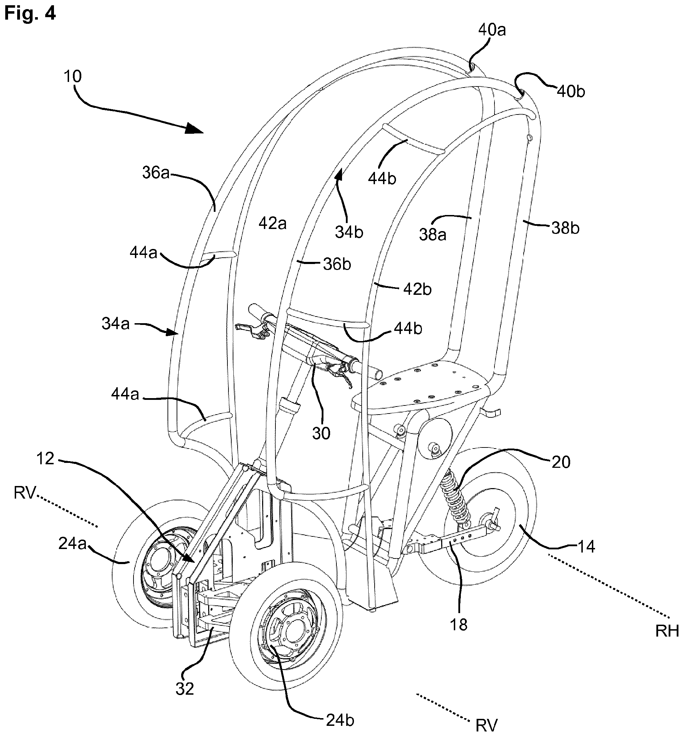

Fig. 4 zeigt das Fahrzeug 10 in einer perspektivischen Ansicht von schräg vorne. Hinsichtlich der dargestellten Bezugszeichen wird auf die obige Beschreibung zu den Fig. 1 bis 3 verwiesen, in der jedes dieser Bezugszeichen bereits beschrieben worden ist. In Fig. 4 sind noch Rotationsachse RV der Vorderräder 24a, 24b bei Geradeauslauf des Fahrzeugs und die Rotationsachse RH des Hinterrads angedeutet. Wie insbesondere aus den Figuren 2 und 4 ersichtlich, sind die Vorderräder 24a, 24b im Geradeauslauf des Fahrzeugs im Wesentlichen parallel zueinander ausgerichtet. Bei einer Kurvenfahrt, wie sie in Fig. 3 gezeigt ist, wird die Parallelität der Vorderräder 24a, 24b insoweit verändert, als dass zumindest das kurveninnenseitige Vorderrad üblicherweise etwas mehr eingeschlagen ist, als das kurvenaußenseitige Vorderrad, so wie dies für Achsschenkellenkungen (Ackermann-Prinzip) üblich ist.

Es wird darauf hingewiesen, dass die Vorderachseinrichtung 22 gemeinsam mit einer Neigekinematik 32 der Vorderräder 24a, 24b als gesamte Einheit lösbar mit dem Fahrzeugrahmen 26 verbunden sein kann. Ferner kann die Hinterachseinrichtung 12 gemeinsam mit der Radaufhängung 18 (Fig. 1) und einer Federungseinrichtung 20 (Fig. 1) als Einheit lösbar mit dem Fahrzeugrahmen 26 verbunden sein.

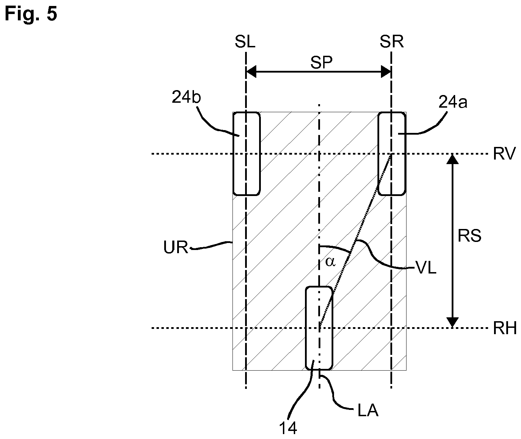

Fig. 5 zeigt in einer schematischen Ansicht die beiden Vorderräder 24a, 24b und das Hinterrad 14 des Fahrzeugs 10. In dieser Darstellung sind auch die beiden Rotationsachsen RV und RH (Fig. 4) wieder eingezeichnet. Die gestrichelten Linien SR und SL illustrieren die jeweilige Spur des betreffenden Vorderrads 24a, 24b. Die beiden Vorderräder 24a, 24b sind in der Fig. 5 im Geradeauslauf des Fahrzeugs 10 gezeigt, wobei die beiden Vorderräder 24a, 24b im Wesentlichen parallel zueinander ausgerichtet sind. Die strichpunktierte Linie LA zeigt eine mittige Längsachse des Fahrzeugs 10. Diese Längsachse LA illustriert beim Geradeauslauf des Fahrzeugs 10 auch die Spur des Hinterrads 14.

Zwischen den beiden Rotationsachsen RV und RH wird ein Radstand RS gemessen. Der Radstand wird dabei zwischen den Radmitten der Vorderräder 24a, 24b und dem Hinterrad gemessen. Zwischen den beiden Spurlinien SL und SR wird der Abstand der beiden Vorderräder 24, 24b bzw. deren Spurweite SP gemessen. Die Spurweite ist dabei der Abstand zwischen den Radaufstandspunkten der beiden Vorderräder 24a, 24b.

Wie aus den Figuren 1 bis 4 ersichtlich, weist das hier vorgestellte Fahrzeug eine sehr kompakte Bauform auf. Diese Bauform kann durch die folgenden Kennzahlen ausgedrückt werden, die unter Bezugnahme auf die Fig. 5 bestimmt werden.

Ein Kompaktheitswert KW, der sich aus dem Verhältnis zwischen dem Abstand SP der im Geradeauslauf im Wesentlichen parallel angeordneten Vorderräder 24a, 24b zueinander und dem in Geradeauslaufstellung der Vorderräder 24a, 24b gemessenen Radstand RS zwischen den Vorderrädern 24a, 24b und dem Hinterrad 14 berechnet, erfüllt folgende Bedingung:

$$\text{bei } KW = SP \ / \ RS$$

$$0{,}35 \leq KW \leq 0{,}80,$$

insbesondere $0{,}62 \leq KW \leq 0{,}78$.

Der Radstand RS beträgt dabei 1300mm oder weniger, insbesondere 900mm bis 1100mm. Damit liegt der Radstand RS des Fahrzeugs 10 in der Größenordnung von einem Fahrrad. Der Abstand SP (Spurweite) zwischen den im Geradeauslauf im Wesentlichen parallel angeordneten Vorderrädern 24a, 24b beträgt 1000mm oder weniger und 500mm oder mehr, insbesondere 600mm bis 700mm. Hieraus ergibt sich zum einen allgemein und speziell bei einem Radstand von 900mm bis 1100mm und einer Spurweite der Vorderräder 24a, 24b von 600mm bis 700mm eine sehr kompakte Bauweise des Fahrzeugs 10, wobei das Fahrzeug einen sehr geringen Raumbedarf aufweist.

Insbesondere nimmt ein die drei Räder 14, 24a, 24b umgebendes Rechteck UR, wie es in der Fig. 5 schraffiert illustriert ist, eine Fläche ein, die kleiner ist als 1,5m². Insbesondere können der Radstand RS und die Spurweite SP so gewählt sein, dass das die drei Räder umschreibende Rechteck UR, das als eine Art projizierte Grundfläche des Fahrzeugs verstanden werden kann und das sich beispielsweise aus der Fahrzeuglänge und der Fahrzeugbreite als Rechteckseiten bestimmen lässt, eine Fläche von etwa 0,8 bis 1,2 m² aufweist.

Als weitere einzuhaltende Bedingung für ein Fahrzeug 10 ist vorgesehen, dass das Hinterrad 14 im Geradeauslauf mittig zwischen den Vorderrädern 24a, 24b angeordnet ist, derart, dass zwischen der mittig verlaufenden Längsachse LA des Fahrzeugs 10 und einer gedachten Verbindungslinie VL zwischen dem Hinterrad 14 und einem der Vorderräder 24a ein Winkel α gebildet ist, der 15° und mehr beträgt, insbesondere 17,5° und mehr beträgt. Üblicherweise wird der Winkel α nicht größer als 40° sein, insbesondere ist er kleiner als 35°.

Um einem Fahrer unabhängig von seiner Körpergröße eine gute Sicht aus dem Fahrzeug 10 zu ermöglichen, soll eine Sitzeinrichtung 46 derart im Fahrzeug 10 angeordnet sein, dass eine Sitzfläche 48 eines Sitzes 50 der Sitzeinrichtung 46 im unbelasteten Zustand des Fahrzeugs auf einer Höhe HS über dem das Fahrzeug 10 abstützenden Untergrund UG liegt, die 700mm oder mehr beträgt. Dies ist vereinfacht in Fig. 1 illustriert. Es wird darauf hingewiesen, dass bei der Messung der Höhe HS ein eventuell auf dem Sitz 50 angeordnetes Polster unberücksichtigt bleiben kann, weil dieses ja Verformungen unterliegt, die abhängig vom Körpergewicht des Fahrers sind.

Der Sitz 50 der Sitzeinrichtung 46 kann in Längsrichtung des Fahrzeugs 10 relativ zum Fahrzeugrahmen 26 verstellbar ausgeführt sein. Die Sitzeinrichtung 46 kann eine in Fig. 1 gestrichelt angedeutete Rückenlehne 52 aufweisen, die mit dem Sitz 50 in Längsrichtung des Fahrzeugs 10 verstellbar ist oder/und die relativ zum Sitz 50 verstellbar ist.

An dem Fahrzeugrahmen 26, insbesondere an dessen Hauptrahmen 34a, 34b ist eine Sicherheitsvorrichtung 54, insbesondere eine Sicherheitsgurtvorrichtung, angeordnet. Dies ist rein schematisch ebenfalls in Fig. 1 illustriert. Dabei ist wenigstens ein Haltepunkt 56 der Sicherheitsvorrichtung 54 derart an dem Fahrzeugrahmen 26 angeordnet ist, dass auf die Sicherheitsvorrichtung wirkende Kräfte in einen oberen oder/und vorderen Abschnitt des Fahrzeugrahmens 26, insbesondere der Hauptrahmen 34a, 34b oder/und der Hilfsrahmen 42a, 42 eingeleitet werden. Ein weiterer Haltepunkt 58 ist beispielsweise unterhalb des Sitzes 50 an dem Fahrzeugrahmen 26 bzw. einem Hautrahmen 34a, 34b angeordnet.

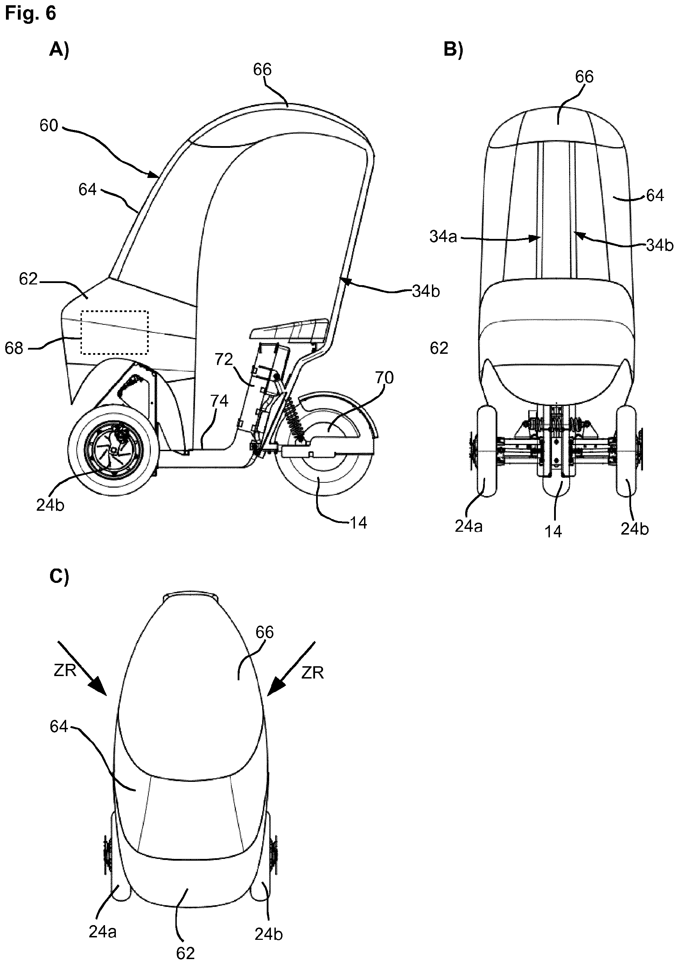

Fig. 6 zeigt in den Teilfiguren A) bis C) ein Fahrzeug 10 mit einer Verschalung 60. Die Verschalung 60 ist im vorliegenden Beispiel der Fig. 6 rein beispielhaft aus einem Frontverschalungselement 62, einem transparenten Scheibenverschalungselement 64 und einem Dachverschalungselement 66 gebildet. Die Verschalung 60 ist insbesondere derart ausgebildet ist, dass der Zugang zum Fahrzeug bezogen auf dessen Längsrichtung insbesondere beidseitig von schräg hinten bzw. seitlich ermöglicht ist, was durch die beiden Pfeile ZR in Fig. 6C illustriert ist. Die Verschalung 60 kann wenigstens ein Solarmodul aufweisen. Ein Solarmodul kann beispielsweise Teil eines Dachverschalungselements 66 oder eine Frontverschalungselements 62 sein.

Der Fahrzeugrahmen des Fahrzeugs 10 derart ausgebildet ist, dass in einem Bereich oberhalb der Vorderräder 24a, 24b ein Stauraum 68ausgebildet ist, der in Fig. 6A als gestricheltes Rechteck rein schematisch illustriert ist.

Der Vollständigkeit halber wird noch darauf hingewiesen, dass der elektrische Antrieb als Radnabenmotor 70 ausgebildet sein kann, der auf das Hinterrad 14 wirkt. Ferner kann das Fahrzeug 10 eine Batterieanordnung 72 aufweisen, die beispielsweise unterhalb des Sitzes 50 angeordnet ist, wobei auch andere Positionen innerhalb des Fahrzeugs 10 denkbar sind, etwa im Bereich einer Fußauflage 74. Eine Batterieanordnung weist wenigstens eine Batterie auf und ist bevorzugt derart ausgebildet ist, dass die wenigstens eine Batterie in einer lösbaren Verankerung aufgenommen ist, wobei bei in der Verankerung aufgenommener Batterie gleichzeitig ein elektrischer Kontakt von der Batterie zu Stromversorgungsleitungen des Fahrzeugs lösbar hergestellt ist.

Alternativ kann die Batterieanordnung ein Batteriefach in einer Bodenplatte aufweisen, das mit einem Deckel versehen ist, wobei an dem Deckel eine Verriegelung vorgesehen sein kann, die durch Aktivieren eines Schalters oder Auslösen der Aktivierung an einem Mobilfunkgerät entriegelbar ist.

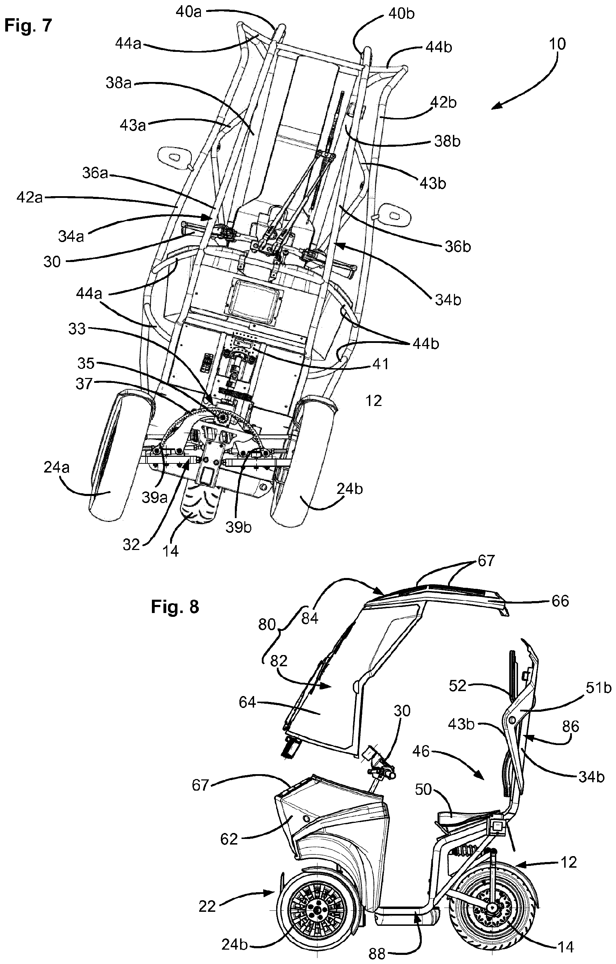

Fig. 7 zeigt eine schematische und vereinfachte Frontansicht des Fahrzeugs 10 in einer leicht modifizierten Ausgestaltung bzw. Ausführungsform. Der Fahrzeugrahmen 26 umfasst ebenfalls zwei Hauptrahmen 34a, 34b, die im zusammengebauten Zustand des Fahrzeugs 10 jeweils als geschlossene bzw. umlaufende Trageelemente ausgebildet sind. Die beiden Hauptrahmen 34a, 34b können aus mehreren Hauptrahmenabschnitten gebildet sein, die miteinander verbunden sind. Die Verbindung von Rahmenelementen bzw. Rahmenabschnitten kann dabei lösbar oder unlösbar, oder/und materialschlüssig (verschweißt, verklebt) oder/und formschlüssig (geklemmt, geschraubt) ausgeführt sein. Beispielsweise ist aus der Darstellung der Fig. 7 ersichtlich, dass die Hauptrahmen 34a, 34b einen vorderen Hauptrahmenabschnitt 36a, 36b und einen hinteren Hauptrahmenabschnitt 38a, 38b aufweisen, die an Verbindungsstellen 40a, 40b miteinander gekoppelt sind. Die Hinterachseinrichtung 12 und die Vorderachseinrichtung 22 sind mit den beiden Hauptrahmen 34a, 34b verbunden. Mit anderen Worten bilden die Hauptrahmen 34a, 34b eine Art Chassis des Fahrzeugs, das mit dem Fahrwerk (Achseinrichtungen 12, 22 mit Rädern 14, 24a, 24b) verbunden ist.

An den beiden Hauptrahmen 34a, 34b sind seitlich Hilfsrahmen 42a, 42b angebracht. Die Hilfsrahmen 42a, 42b sind insbesondere mittels mehrerer Streben 44a, 44b mit dem jeweiligen Hauptrahmen 34a, 34b verbunden. Die Hilfsrahmen 42a, 42b dienen insbesondere dazu, die hier nicht dargestellte Verschalung für das Fahrzeug 10 abzustützen.

Es wird nochmals darauf hingewiesen, dass die hier dargestellte Ausführungsform des Fahrzeugrahmens 26 mit Hauptrahmen 34a, 34b und Hilfsrahmen 42a, 42 rein beispielhaft ist. Es ist auch denkbar, das seitlich äußere Rahmenelemente, wie etwa die hier als Hilfsrahmen 42a, 42b gezeigten, als Hauptrahmen dienen. Ferner wird darauf hingewiesen, dass der Fahrzeugrahmen auch weitere Rahmenelemente und Verbindungen aufweisen kann und auch geometrisch andere Formen als die hier dargestellten aufweisen kann. Wesentlich ist, dass der Fahrzeugrahmen eine den Insassen bzw. Fahrer umgebende, geschlossene Konstruktion ist.

In der Ausführungsform der Fig. 7 umfasst der Fahrzeugrahmen 26 auch zwei hinten seitlich angeordnete Winkelabschnitte 43a, 43b. Die Winkelabschnitte 43a, 43b sind an den hinteren Hauptrahmenabschnitten 38a, 38b angeordnet bzw. befestigt. Die Winkelabschnitte 43a, 43b bilden eine Art seitlich und nach vorne abstehende Schutzbauteile, die einen Fahrzeugbenutzer von einem Anprall von seitlich hinten schützen können. Insbesondere können die Winkelabschnitte 43a, 43b als Schutz für die Schultern eines Benutzers dienen, falls das Fahrzeug 10 etwa durch Einwirkung von äußeren Kräften (seitlicher Anprall eines anderen Verkehrsteilnehmers) zur Seite kippen sollte. I Es wird in diesem Zusammenhang darauf hingewiesen, dass das Fahrzeug 10 aufgrund seines Kompaktheitwertes (siehe Beschreibung oben) im normalen Fahrbetrieb nicht kippt, sondern in jeder Fahrsituation und Kurvenlage stabil auf seinen drei Rädern steht bzw. fährt.

Im Bereich der parallelkinematischen Radaufhängung 32, die auch allgemein als Neigekinematik bezeichnet werden kann, ist bei dies Ausführungsform ein Neigeaktuator 33 vorgesehen. Der Neigeaktuator 33 ist beispielhaft als Motor mit einem Ritzel 35 ausgeführt. Das Ritzel 35 greift ein eine gebogen ausgeführte Zahnstange 37 ein, deren Enden 39a, 39b mit einem Querträger der Radaufhängung 32 verbunden sind. Der Neigungsaktuator 33 dient insbesondere dazu, dass die seitliche Neigung des Fahrzeugs 10 durch entsprechende Ansteuerung des Motors bzw. Ritzels 35 einstellbar ist. Die hier dargestellte Ausgestaltung des Neigeaktuators 33 mit einem Ritzel 35 ist rein beispielhaft. Der Neigungsaktuator 33 kann auch durch einen oder mehrere Stellzylinder gebildet sein, wobei die Stellzylinder mechanisch oder/und pneumatisch oder hydraulisch betätigbar sein können, um die seitliche Neigung des Fahrzeugs 10 einstellen zu können.

In Fig. 7 ist ferner rein schematisch als gestricheltes Rechteck ein Lenkaktuator 41 gezeigt, der dazu eingerichtet sein kann, einen Lenkeinschlag der Vorderräder 24a, 24b einzustellen. Dabei kann der Lenkaktuator 41 so ausgeführt sein, dass er Lenkbewegungen des Fahrzeugs 10 vollständig automatisch ausführt oder dass manuelle Lenkbewegungen eines Benutzers zumindest teilweise unterstützt oder nur manuelle Lenkbewegungen des Benutzers zulässt.

Fig. 8 zeigt in einer vereinfachten Seitendarstellung das Fahrzeug 10 mit einem angehobenen bzw. vom Rest des Fahrzeugs 10 getrennten Frontrahmenmodul 80.

Das Frontrahmenmodul 80 umfasst Rahmenabschnitte des Fahrzeugrahmens 26 und in diesem Beispiel die Windschutzscheibe 64 und das Dach 66, die mit den entsprechenden Rahmenabschnitten verbunden sind.

Das Frontrahmenmodul 80 ist in Fig. 8 als ein einziges Rahmenmodul dargestellt. Es wird allerdings darauf hingewiesen, dass es auch mehrteilig ausgeführt sein kann, beispielsweise als vorderes Rahmenmodul 82, an dem die Windschutzscheibe 64 angebracht ist und als oberes Rahmenmodul 84, an dem das Dach 66 angebracht ist. In einem solchen Fälle könnte das obere Rahmenmodul 84 zusammen mit dem Dach 66 als einziges Rahmenmodul von dem Fahrzeug 10 abgenommen werden, um eine offenes Fahren, vergleichbar mit einem Cabriolet, zu ermöglichen.

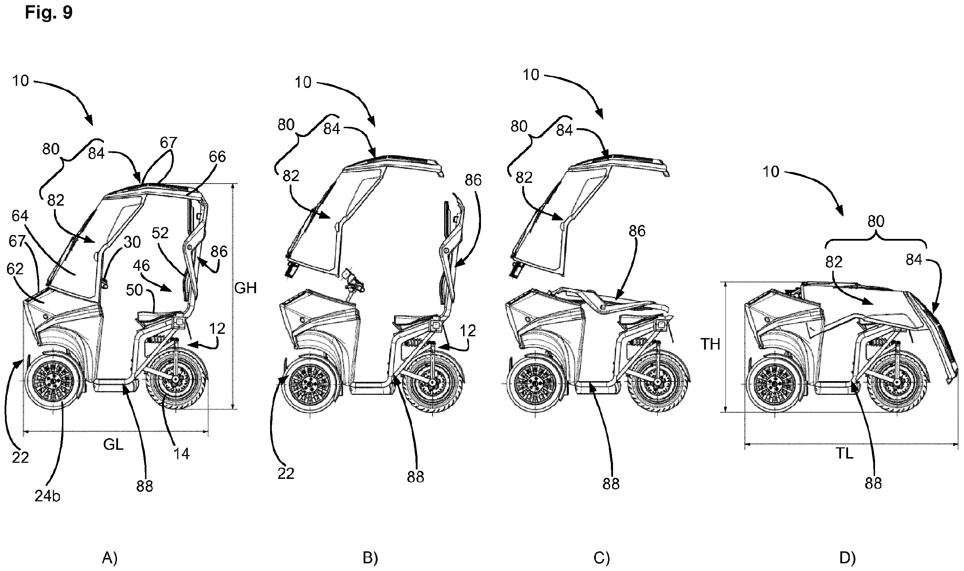

Aus der seitlichen Darstellung der Fig. 8 ist beispielhaft auch die Ausgestaltung des oben unter Bezugnahme auf die Fig. 7 erwähnten Winkelabschnitts 43b ersichtlich, der in dieser Darstellung als einziger Winkelabschnitt dargestellt ist. In der Fig. 8 ist der Winkelabschnitt 43b, der an dem Fahrzeugrahmen 26, insbesondere dem hinteren Rahmenabschnitt 34b, angebracht ist, von einer Abdeckung bzw. Verkleidung 51b abgedeckt. Im Übrigen wird darauf hingewiesen, dass in der Darstellung der Fig. 8 auch einige Bezugszeichen eingefügt sind, die später unter Bezugnahme auf Fig. 9 beschrieben werden.

Fig. 9 zeigt in den Teilfiguren A) bis D) schematisch und vereinfacht das Fahrzeug 10 in der Ausführungsform der Fig. 7 und 8 in unterschiedlichen Montage- bzw. Demontagezuständen. Die Fig. 9 dient insbesondere dazu, den modularen Aufbau des Fahrzeugs 10 beispielhaft zu illustrieren.

Fig. 9A zeigt das Fahrzeug 10 in einem vollständig montierten Zustand. Ersichtlich sind das linke Vorderrad 24b, das Hinterrad 14, der Fahrzeugrahmen 26, die Lenkeinrichtung 30 sowie die Sitzeinrichtung 46 mit einem Sitz 50 und einer Rückenlehne 52. Das Fahrzeug 10 weist eine Verschalung 60, die beispielsweise ein Frontverschalungselement 62, ein transparentes Scheibenverschalungselement 64 und ein Dachverschalungselement 66 umfasst. An dem Dachverschalungselement 66 können Solarmodule 67 angeordnet sein. Ferner können auch an dem Frontverschalungselement 62 Solarmodule 67 vorgesehen sein.

Fig. 9B zeigt in verkleinerter Darstellung das Fahrzeug 10 wie es bereits in der Fig. 8 gezeigt ist. Wie bereits oben beschrieben, ist das Frontrahmenmodul 80 vom Rest des Fahrzeugs 10 getrennt bzw. abgehoben dargestellt. Das Frontrahmenmodul 80 kann als ein modulares Stück vom Rest des Fahrzeugs 10 abgenommen bzw. entfernt werden.

Fig. 9C zeigt beispielhaft, dass ein hinteres Rahmenmodul 86 von dem Rest des Fahrzeugs 10 getrennt werden kann oder relativ zu diesem nach vorne umgeklappt werden kann. Das hintere Rahmenmodul 86 kann beispielweise die Rückenlehne 52 umfassen. Ferner können dem hinteren Rahmenmodul 86 auch die Winkelabschnitte 43a, 43b (siehe Fig. 8) zugeordnet werden.

Fig. 9D zeigt einen Zustand, in dem das Frontrahmenmodul 80 über dem nach vorne geklappten hinteren Rahmenmodul 86 angeordnet ist. Das Frontrahmenmodul 80 und das hintere Rahmenmodul 86 liegen dabei auf einem unteren Rahmenmodul 88 auf. Das untere Rahmenmodul 88 kann insbesondere der Teil des Fahrzeugs 10 sein, an dem die Vorderachseinrichtung 22 und die Hinterachseinrichtung 12 angebracht sind. Auch wenn das untere Rahmenmodul 88 erst in Bezug auf die Fig. 9D erstmals erwähnt worden ist, ist es klar, dass das untere Rahmenmodul 88 auch in den anderen Darstellungen der Fig. 9A bis 9C ersichtlich ist.

In einem montierten Zustand gemäß Fig. 9A weist das Fahrzeug 10 ein Gesamtlänge GL und eine Gesamthöhe GH auf. In einem teilweise demontierten Zustand gemäß Fig. 9D, der beispielsweise auch als Transportzustand oder Lagerzustand bezeichnet werden kann, weist das Fahrzeug 10 eine Transportlänge TL und eine Transporthöhe TH auf. Dabei kann die Transportlänge etwas größer sein als die Gesamtlänge GL. Durch entsprechende Ausgestaltung des Frontrahmenmoduls 80 und dessen Anordnung auf dem unteren Rahmenmodul 88 im Transportzustand (Fig. 9D) entspricht die Transportlänge maximal etwa dem 1,25-Fachen der Gesamtlänge. Bevorzugt ist die Transportlänge etwa 10% bis 15% größer als die Gesamtlänge. Die Transporthöhe TH ist deutlich kleiner als die Gesamthöhe GH. Insbesondere kann die Transporthöhe etwa dem 0,65-Fachen der Gesamthöhe GH entsprechen. Bevorzugt ist die Transporthöhe TH etwa 55% bis 40% kleiner als die Gesamthöhe GH.

Durch den modularen Aufbau kann das Fahrzeug 10 einerseits rasch montiert bzw. demontiert werden. Dies ist beispielsweise von Vorteil, wenn im Rahmen von Instandsetzung oder Wartung, Teil des Fahrzeugs 10 ausgetauscht werden müssen. Ist beispielsweise eine Windschutzscheibe 64 aufgrund von Witterungseinflüssen, Steinschlag oder dergleichen abgenutzt bzw. hat sie Sprünge oder Risse, kann das Fahrzeug durch Austausch des Frontrahmenmoduls 80 rasch instandgesetzt werden, ohne dass lange Standzeiten entstehen.

Andererseits kann das Fahrzeug 10 durch den modularen Aufbau in einfacher Weise verkleinert werden, um es zu transportieren bzw. zu lagern. Hierdurch ist es beispielsweise möglich, auf kleinerem Raum mehr Fahrzeuge 10 in ihrem Transportzustand (Fig. 9D) zu lagern.

In Bezug auf die Figuren 9C und 9D wird noch darauf hingewiesen, dass die Lenkeinrichtung 30 abnehmbar ausgeführt sein kann. Insbesondere kann die Lenkeinrichtung 30 von einer Lenkstange entfernt und in einem hinter dem Frontverschalungselement 62 angeordneten Stauraum 68 untergebracht werden. Die Lenkeinrichtung 30 kann als ebenfalls modular aufgebaut sein.

Alle Rahmenmodule, wie vorderes Rahmenmodul 82, oberes Rahmenmodul 84, hinteres Rahmenmodul 86 und unteres Rahmenmodul 88 können gelenkig verbunden sein, insbesondere über eine jeweilige Gelenkanordnung, die in einer Position fixiert werden kann und gelöst werden kann, so dass man ein betreffendes Rahmenmodul um dieses Gelenk bewegen bzw. klappen kann. Alternativ oder ergänzend können die Rahmenmodule komplett demontierbar ausgeführt sein, beispielsweise unter Einsatz von Steckverbindungen, Verschraubungen, Stiftverbindungen und dergleichen. Selbstverständlich können auch Kombinationen von solchen Befestigungen der Rahmenmodule vorgesehen sein, beispielsweise können das vordere Rahmenmodul 82 und das obere Rahmenmodul 84 vollständig vom Rest des Fahrzeugs 10 demontierbar sein, wobei das hintere Rahmenmodul 86 gelenkig mit dem unteren Rahmenmodul 88 verbunden ist, so dass das hintere Rahmenmodul 86 relativ zum unteren Rahmenmodul 88 auf- bzw. zugeklappt werden kann.

Das hier beschriebene dreirädrige Elektrofahrzeug weist eine sehr kompakte Bauweise auf und nimmt sowohl im laufenden Verkehr als auch als stehendes bzw. geparktes Fahrzeug sehr wenig Raum bzw. Fläche in Anspruch. Somit eignet sich das vorgestellte Elektrofahrzeug in besonderer Weise als Fortbewegungsmittel für Einzelpersonen in städtischen Umgebungen. Durch seine sicherheitstechnische Ausgestaltung sowie dem Einsatz der Neigetechnik kann das Fahrzeug aktuell mit einer Geschwindigkeit von 45km/h von allen Personen genutzt werden, die einen Führerschein für Personenkraftwagen bzw. Kleinmotorräder haben.

**Patentansprüche**

1. Dreirädriges Elektrofahrzeug (10) mit

einer Vorderachseinrichtung (22) mit zwei lenkbaren, im Geradeauslauf im Wesentlichen parallel zueinander ausgerichteten Vorderrädern (24a, 24b);
einer Hinterachseinrichtung (12) mit einem angetriebenen Hinterrad (14);
einem Fahrzeugrahmen (26), an dem die Vorderachseinrichtung (22) und die Hinterachseinrichtung (12) abgestützt sind;
wobei die Vorderachseinrichtung (22) derart ausgebildet ist, dass der Fahrzeugrahmen (26) und die Vorderräder (24a, 24b) bei einem Lenkeinschlag in die Richtung des Lenkeinschlags neigbar sind;

wobei ein Kompaktheitswert KW, der sich berechnet aus dem Verhältnis zwischen dem Abstand SP der im Geradeauslauf im Wesentlichen parallel angeordneten Vorderrädern (24, 24B) zueinander und dem in Geradeauslaufstellung der Vorderräder (24, 24b) gemessenen Radstand RS zwischen den Vorderrädern (24a, 24b) und dem Hinterrad (14) folgende Bedingung erfüllt:

$$bei \ KW = SP \ / \ RS$$

$$0,35 \le KW \le 0,80$$

**dadurch gekennzeichnet, dass**
der Fahrzeugrahmen (26, 34a, 34b) in sich geschlossen ist und derart umlaufend ausgebildet ist, dass er einen im Fahrzeug (10) aufgenommenen Fahrer mit dessen Oberkörper und Kopf umgibt, und dass an dem Fahrzeugrahmen (26, 34a, 34b, 42a, 42b) eine Sicherheitsgurtvorrichtung (54) angeordnet ist, wobei wenigstens ein Haltepunkt (56) der Sicherheitsgurtvorrichtung (54) derart an dem Fahrzeugrahmen (26, 34a, 34b, 42a, 42b) angeordnet ist, dass auf die Sicherheitsgurtvorrichtung (54) wirkende Kräfte in einen oberen oder/und vorderen Abschnitt des Fahrzeugrahmens (26, 34a, 34b, 42a, 42b) eingeleitet werden,
wobei die Vorderachseinrichtung (22) gemeinsam mit einer Neigekinematik (32) der lenkbaren Vorderräder (24a, 24b) als gesamte Einheit lösbar mit dem Fahrzeugrahmen (26) verbunden ist.

2. Dreirädriges Elektrofahrzeug nach Anspruch 1, wobei der Radstand RS 1300mm oder weniger beträgt, insbesondere 900mm bis 1100mm und der Abstand SP zwischen den im Geradeauslauf im Wesentlichen parallel angeordneten Vorderrädern (24a, 24b) 1000mm oder weniger und 500mm oder mehr, insbesondere 600mm bis 800mm beträgt.

3. Dreirädriges Elektrofahrzeug nach Anspruch 1 oder 2, wobei das Hinterrad (14) im Geradeauslauf mittig zwischen den Vorderrädern (24a, 24b) angeordnet ist, derart, dass zwischen einer mittig verlaufenden Längsachse (LA) des Fahrzeugs (10) und einer gedachten Verbindungslinie (VL) zwischen dem Hinterrad und einem der Vorderräder ein Winkel ($\alpha$) gebildet ist, der 15° und mehr beträgt, insbesondere 17,5° und mehr beträgt.

4. Dreirädriges Elektrofahrzeug nach einem der vorhergehenden Ansprüche, wobei an dem Fahrzeugrahmen (26) eine Sitzeinrichtung (46) für einen Fahrer des Fahrzeugs angeordnet ist, wobei eine Sitzfläche (48) eines Sitzes (50) der Sitzeinrichtung (46) im unbelasteten Zustand des Fahrzeugs (10) auf einer Höhe (HS) über dem das Fahrzeug (10) abstützenden Untergrund (UG) liegt, die 700mm oder mehr beträgt.

5. Dreirädriges Elektrofahrzeug nach Anspruch 4, wobei der Sitz (50) der Sitzeinrichtung (46) in Längsrichtung des Fahrzeugs (10) relativ zum Fahrzeugrahmen (26) verstellbar ist, insbesondere um 150 bis 200mm entlang einer zum Untergrund (UG) im Wesentlichen parallelen oder geneigten Verstellebene.

6. Dreirädriges Elektrofahrzeug nach einem der vorhergehenden Ansprüche, wobei der elektrische Antrieb als Radnabenmotor (70) ausgebildet ist, der auf das Hinterrad (14) wirkt.

7. Dreirädriges Elektrofahrzeug nach einem der vorhergehenden Ansprüche, wobei das Fahrzeug (10) eine Batterieanordnung (72) aufweist mit wenigstens einer Batterie, wobei die Batterieanordnung (72) derart ausgebildet ist, dass die wenigstens eine Batterie in einer lösbaren Verankerung aufgenommen ist, wobei bei in der Verankerung aufgenommener Batterie gleichzeitig ein elektrischer Kontakt von der Batterie zu Stromversorgungsleitungen des Fahrzeugs (10) lösbar hergestellt ist, wobei vorzugsweise die Batterieanordnung ein Batteriefach in einer Bodenplatte aufweist, das mit einem Deckel versehen ist, wobei an dem Deckel eine Verriegelung vorgesehen ist, die durch Aktivieren eines Schalters oder Auslösen der Aktivierung an einem Mobilfunkgerät entriegelbar ist.

8. Dreirädriges Fahrzeug nach einem der vorhergehenden Ansprüche, wobei die Hinterachseinrichtung (12) gemeinsam mit einer Radaufhängung (18) und einer Federungseinrichtung (20) als Einheit lösbar mit dem Fahrzeugrahmen verbunden ist.

9. Dreirädriges Fahrzeug nach einem der vorhergehenden Ansprüche, wobei es wenigstens einen Neigungsaktuator (33, 35, 37) umfasst, der dazu eingerichtet ist, die seitliche Neigung des Fahrzeugs bei Kurvenfahrten einzustellen.

10. Dreirädriges Fahrzeug nach Anspruch 9, wobei der wenigstens eine Neigungsaktuator (33, 35, 37) dazu eingerichtet ist, die seitliche Neigung basierend auf wenigstens einer Fahrdatengröße einzustellen, insbesondere in Abhängigkeit von einem erfassten Lenkeinschlag oder/und von der Geschwindigkeit des Fahrzeugs oder/und von der seitlichen Schräglage des Fahrzeugs zum Untergrund.

**11.** Dreirädriges Fahrzeug nach einem der vorhergehenden Ansprüche, wobei es wenigstens einen Lenkaktuator (41) umfasst, der dazu eingerichtet ist, einen Lenkeinschlag der Vorderräder (24a, 24b) einzustellen.

**12.** Dreirädriges Fahrzeug nach Anspruch 11, wobei der wenigstens eine Lenkaktuator (41) dazu eingerichtet ist, Lenkbewegungen vollständig automatisch auszuführen oder manuelle Lenkbewegungen eines Benutzers zumindest teilweise zu unterstützen oder nur manuelle Lenkbewegungen des Benutzers zuzulassen.

**13.** Dreirädriges Fahrzeug nach einem der vorhergehenden Ansprüche, wobei der Fahrzeugrahmen (26) aus wenigstens zwei Rahmenmodulen (80, 82, 84, 86, 88) gebildet ist, wobei die Rahmenmodule (80, 82, 84, 86, 88) lösbar miteinander gekoppelt sind oder/und beweglich zueinander gekoppelt sind, wobei vorzugsweise die Rahmenmodule (80, 82, 84, 86, 88) werkzeuglos miteinander koppelbar bzw. voneinander demontierbar sind.

**14.** Dreirädriges Fahrzeug nach Anspruch 13, wobei es umfasst:

ein vorderes Rahmenmodul (82), an dem eine Windschutzscheibe (64) angeordnet ist, oder/und ein hinteres Rahmenmodul (86), an dem eine Rückenlehne (52) eines Fahrzugsitzes (46) angeordnet ist, oder/und ein oberes Rahmenmodul (84), an dem ein Fahrzeugdach (66) angeordnet ist, oder/und ein unteres Rahmenmodul (88), an dem die Vorderachseinrichtung (22) und die Hinterachseinrichtung (12) angeordnet sind.

**Claims**

**1.** A three-wheeled electric vehicle (10), comprising

a front-axle device (22) having two steerable front wheels (24a, 24b) which are aligned essentially in parallel to one another in the straight-run position; a rear-axle device (12) comprising a driven rear wheel (14); a vehicle frame (26) on which the front-axle device (22) and the rear-axle device (12) are supported; wherein the front-axle device (22) is formed such that, during a steering movement, the vehicle frame (26) and the front wheels (24a, 24b) may tilt in the direction of the steering movement;

wherein a compactness value KW, which is calculated from the ratio between the distance SP of the front wheels (24, 24B), which are arranged essentially in parallel to one another in the straight-run position, and the wheelbase RS measured between the front wheels (24a, 24b) and the rear wheel (14) in the straight-run position of the front wheels (24, 24b), satisfies the following condition:

$$\text{with } KW = SP \ / \ RS$$

$$0.35 \le KW \le 0.80$$

**characterized in that** the vehicle frame (26, 34a, 34b) is closed in itself and is formed such that it surrounds a driver with its upper body and head accommodated in the vehicle (10), and that a safety belt device (54), is arranged on the vehicle frame (26, 34a, 34b, 42a, 42b), wherein at least one holding point (56) of the safety belt device (54) is arranged on the vehicle frame (26, 34a, 34b, 42a, 42b) such that forces acting on the safety belt device (54) are introduced into an upper and/or front section of the vehicle frame (26, 34a, 34b, 42a, 42b), wherein the front-axle device (22), together with a tilt kinematics system (32) of the steerable front wheels (24a, 24b), is releasably connected to the vehicle frame (26) as a complete unit.

**2.** The three-wheeled electric vehicle according to claim 1, wherein the wheelbase RS is 1300mm or less, more preferably 900mm to 1100mm, and the distance SP of the front wheels (24a, 24b) arranged essentially in parallel in the straight-run position is 1000mm or less and 500mm or more, more preferably 600mm to 800mm.

**3.** The three-wheeled electric vehicle according to Claim 1 or 2, wherein the rear wheel (14), in the straight-run position, is arranged centrally between the front wheels (24a, 24b) such that an angle ($\alpha$) is formed between a central longitudinal axis (LA) of the vehicle (10) and an imaginary connecting line (VL) between the rear wheel and one of the front wheels which is 15° and more, more preferably 17,5° and more.

**4.** The three-wheeled electric vehicle according to any of the preceding claims, wherein a seat device (46) for a driver of the vehicle is arranged on the vehicle frame (26), wherein a seat surface (48) of a seat (50) of the seat device (46) in the unloaded state of the vehicle (10) is located at a height (HS) above the ground (UG) supporting the vehicle (10) which is 700mm or more.

5. The three-wheeled electric vehicle according to claim 4, wherein the seat (50) of the seat device (46) is adjustable in the longitudinal direction of the vehicle (10) relative to the vehicle frame (26), in particular by 150 to 200mm along an adjustment plane that is essentially parallel or inclined to the ground (UG).

6. The three-wheeled electric vehicle according to any of the preceding claims, wherein the electric drive is formed as a wheel hub motor (70) which acts on the rear wheel (14).

7. The three-wheeled electric vehicle according to any of the preceding claims, wherein the vehicle (10) comprises a battery arrangement (72) having at least one battery, the battery arrangement (72) being formed such that the at least one battery is received in a detachable fastening, wherein a detachable electrical contact from the battery to the power supply lines of the vehicle (10) is made at the same time that the battery is received in the fastening, wherein preferably the battery arrangement comprises a battery compartment in a base plate, the battery compartment being provided with a cover, wherein a lock is provided on the cover which may be unlocked by activating a switch or by triggering activation on a mobile device.

8. The three-wheeled vehicle according to any of the preceding claims, wherein the rear-axle device (12), together with a wheel suspension (18) and a suspension device (20), is releasably connected as a unit to the vehicle frame.

9. The three-wheeled vehicle according to any of the preceding claims, comprising at least one tilt actuator (33, 35, 37) which is configured to adjust the lateral tilt of the vehicle when cornering.

10. The three-wheeled vehicle according to claim 9, wherein the at least one tilt actuator (33, 35, 37) is configured to set the lateral tilt based on at least one driving data variable, in particular as a function of a detected steering angle and/or the speed of the vehicle or/and from the lateral inclination of the vehicle relative to the ground.

11. The three-wheeled vehicle according to any of the preceding claims, comprising at least one steering actuator (41) which is configured to set a steering angle of the front wheels (24a, 24b).

12. The three-wheeled vehicle according to claim 11, wherein the at least one steering actuator (41) is configured to carry out steering movements in a fully automated manner or to at least partially support manual steering movements by a user or to allow manual steering movements of the user only.

13. The three-wheeled vehicle according to any of the preceding claims, wherein the vehicle frame (26) is formed from at least two frame modules (80, 82, 84, 86, 88), wherein the frame modules (80, 82, 84, 86, 88) are releasably coupled to one another or/and are movably coupled to one another, the frame modules (80, 82, 84, 86, 88) being preferably able to be coupled to one another or dismantled from one another without any tools.

14. The three-wheeled vehicle of claim 13, comprising:

a front frame module (82) on which a windscreen (64) is arranged,
and/or a rear frame module (86) on which a backrest (52) of a vehicle seat (46) is arranged,
and/or an upper frame module (84) on which a vehicle roof (66) is arranged,
and/or a lower frame module (88) on which the front-axle device (22) and the rear-axle device (12) are arranged.

**Revendications**

1. Véhicule électrique à trois roues (10) avec

un système d'essieu avant (22) avec deux roues avant (24a, 24b) directrices, orientées sensiblement parallèlement l'une à l'autre en ligne droite ;
un système d'essieu arrière (12) avec une roue arrière (14) entraînée ;
un châssis de véhicule (26), sur lequel le système d'essieu avant (22) et le système d'essieu arrière (12) sont en appui;
dans lequel le système d'essieu avant (22) est réalisé de telle manière que le châssis de véhicule (26) et les roues avant (24a, 24b) peuvent être inclinés lors d'un braquage dans la direction de l'angle de braquage ;
dans lequel une valeur de compacité KW, qui est calculée à partir du rapport entre l'écart SP des roues avant (24A, 24B) l'une par rapport à l'autre disposées sensiblement parallèlement en ligne droite et l'empattement RS mesuré dans la position en ligne droite des roues avant (24, 24b) entre les roues avant (24a, 24b) et la roue arrière (14), remplit la condition suivante :

$$\text{pour } KW = SP / RS$$

$$0,35 \leq KW \leq 0,80,$$

**caractérisé en ce que**

le châssis de véhicule (26, 34a, 34b) est fermé sur soi et est réalisé en périphérie de telle manière qu'il entoure un conducteur, reçu dans le véhicule (10), avec sa partie supérieure du corps et sa tête, et qu'un dispositif de ceinture de sécurité (54) est disposé sur le châssis de véhicule (26, 34a, 34b, 42a, 42b), dans lequel au moins un point de fixation (56) du dispositif de ceinture de sécurité (54) est disposé de telle manière sur le châssis de véhicule (26, 34a, 34b, 42a, 42b) que des forces agissant sur le dispositif de ceinture de sécurité (54) sont appliquées dans une section supérieure et/ou avant du châssis de véhicule (26, 34a, 34b, 42a, 42b),
dans lequel le système d'essieu avant (22) est relié de manière amovible au châssis de véhicule (26) conjointement avec une cinématique d'inclinaison (32) des roues avant (24a, 24b) directrices en tant qu'une unité globale.

2. Véhicule électrique à trois roues selon la revendication 1, dans lequel l'empattement RS est inférieur ou égal à 1300 mm, en particulier va de 900 mm à 1100 mm, et l'écart SP entre les roues avant (24a, 24b) disposées sensiblement parallèlement en ligne droite est inférieur ou égal à 1000 mm et est supérieur ou égal à 500 mm, en particulier va de 600 mm à 800 mm.

3. Véhicule électrique à trois roues selon la revendication 1 ou 2, dans lequel la roue arrière (14) est disposée au centre entre les roues avant (24a, 24b) en ligne droite de telle manière qu'est formé, entre un axe longitudinal (LA) s'étendant au centre du véhicule (10) et une ligne de liaison (VL) imaginaire entre la roue arrière et une des roues avant, un angle ($\alpha$), qui est supérieur ou égal à 15°, en particulier supérieur ou égal à 17,5°.

4. Véhicule électrique à trois roues selon l'une des revendications précédentes, dans lequel un système d'assise (46) pour un conducteur du véhicule est disposé sur le châssis de véhicule (26), dans lequel une surface d'assise (48) d'un siège (50) du système d'assise (46) se situe, dans l'état sans charge du véhicule (10), à une hauteur (HS) au-dessus du sol (UG) supportant le véhicule (10), qui est supérieure ou égale à 700 mm.

5. Véhicule électrique à trois roues selon la revendication 4, dans lequel le siège (50) du système d'assise (46) peut être ajusté par rapport au châssis de véhicule (26) dans le sens longitudinal du véhicule (10), en particulier de 150 à 200 mm le long d'un plan d'ajustement sensiblement parallèle ou incliné par rapport au sol (UG).

6. Véhicule électrique à trois roues selon l'une des revendications précédentes, dans lequel l'entraînement électrique est réalisé en tant que moteur de moyeu de roue (70), qui agit sur la roue arrière (14).

7. Véhicule électrique à trois roues selon l'une des revendications précédentes, dans lequel le véhicule (10) présente un ensemble de batteries (72) avec au moins une batterie, dans lequel l'ensemble de batteries (72) est réalisé de telle manière que l'au moins une batterie est reçue dans un ancrage amovible, dans lequel, lorsque la batterie est reçue dans l'ancrage, un contact électrique est établi simultanément de manière amovible par la batterie avec des câbles d'alimentation électrique du véhicule (10), dans lequel de préférence l'ensemble de batteries présente un compartiment de batterie dans un panneau de plancher, qui est pourvu d'un couvercle, dans lequel est prévu sur le couvercle un verrouillage, qui peut être déverrouillé en activant un commutateur ou en déclenchant l'activation sur un appareil de radiocommunication mobile.

8. Véhicule électrique à trois roues selon l'une des revendications précédentes, dans lequel le système d'essieu arrière (12) est relié de manière amovible au châssis de véhicule conjointement avec une suspension de roue (18) et un système de suspension à ressorts (20) en tant qu'unité.

9. Véhicule électrique à trois roues selon l'une des revendications précédentes, dans lequel il comprend au moins un actionneur d'inclinaison (33, 35, 37), qui est mis au point pour régler l'inclinaison latérale du véhicule dans des virages.

10. Véhicule électrique à trois roues selon la revendication 9, dans lequel l'au moins un actionneur d'inclinaison (33, 35, 37) est mis au point pour régler l'inclinaison latérale sur la base d'au moins une grandeur de données de déplacement, en particulier en fonction d'un angle de braquage détecté et/ou de la vitesse du véhicule et/ou de la position latérale à l'oblique du véhicule par rapport au sol.

11. Véhicule électrique à trois roues selon l'une des revendications précédentes, dans lequel il comprend au moins un actionneur de direction (41), qui est mis au point pour régler un angle de braquage des roues avant (24a, 24b).

12. Véhicule électrique à trois roues selon la revendication 11, dans lequel l'au moins un actionneur de direction (41) est mis au point pour exécuter totalement automatiquement des manoeuvres ou pour soutenir au moins en partie des manoeuvres manuelles d'un utilisateur ou pour autoriser seulement des manoeuvres manuelles de l'utilisateur.

**13.** Véhicule électrique à trois roues selon l'une des revendications précédentes, dans lequel le châssis de véhicule (26) est formé à partir d'au moins deux modules de châssis (80, 82, 84, 86, 88), dans lequel les modules de châssis (80, 82, 84, 86, 88) sont couplés de manière amovible l'un à l'autre et/ou sont couplés de manière mobile l'un par rapport à l'autre, dans lequel de préférence les modules de châssis (80, 82, 84, 86, 88) peuvent être couplés l'un à l'autre ou peuvent être démontés l'un de l'autre sans outil.

**14.** Véhicule électrique à trois roues selon la revendication 13, dans lequel il comprend :

un module de châssis avant (82), sur lequel est disposé un pare-brise (64),
et/ou un module de châssis arrière (86), sur lequel est disposé un dossier (52) d'un siège de véhicule (46),
et/ou un module de châssis supérieur (84), sur lequel est disposé un toit de véhicule (66),
et/ou un module de châssis inférieur (88), sur lequel sont disposés le système d'essieu avant (22) et le système d'essieu arrière (12).

**Fig. 1**

**Fig. 2**

**Fig. 3**

**Fig. 4**

**Fig. 5**

**Fig. 6**

A)

B)

C)

**Fig. 7**

**Fig. 8**

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017064631 A1

**In der Beschreibung aufgeführte Nicht-Patentliteratur**

- REVUE AUTOMOBILE. BUECHLER GRAFINO AGF, August 2001, 9